Europäisches Patentamt

(19) **European Patent Office**

**Office européen des brevets**

(11) Veröffentlichungsnummer: **0 026 793**
**A1**

(12) **EUROPÄISCHE PATENTANMELDUNG**

(21) Anmeldenummer: **79103851.6**

(22) Anmeldetag: **08.10.79**

(51) Int. Cl.³: **F 24 D 11/02,** F 24 J 3/04,
**F 25 B 29/00**
**// F02G5/00**

(43) Veröffentlichungstag der Anmeldung: **15.04.81**
**Patentblatt 81/15**

(84) Benannte Vertragsstaaten: **BE CH DE FR GB IT LU NL SE**

(71) Anmelder: **Jenbacher Werke AG, Achenseestrasse, A-6200 Jenbach/Tirol (AT)**

(72) Erfinder: **Fezzi, Ekkehard, Dr. Mont. Dipl.-Ing., Kienbergstrasse 24, A-6200 Jenbach (AT)**

(54) **Wärmepumpe, brennkraftmaschinengetrieben.**

㊗ Eine Wärmepumpe mit einem von einer Brennkraftmaschine (1) angetriebenen Kältemittelverdichter (2), Kondensator (34), Expansionsventil und Verdampfer in einer wärme- und schalldichten sowie schwingungsdämpfend gelagerten Kapsel (29) untergebracht, mit einem Zusatzbrenner (24) und fallweise einem angeflanschten Generator, für Heiz- und Kühlzwecke.

Durch die Kapselung ist eine weitestgehende Ausnützung aller Abfallwärmemengen möglich.

Der Zusatzbrenner dient zur Spitzenlastdeckung und als Reserve.

Der angeflanschte Generator dient zur Stromversorgung, allenfalls zur zusätzlichen Erzeugung von (Elektro-) Wärme.

Jenbacher Werke A.G
A-6200 Jenbach/Tirol, Achenseestrasse AT

79103851.6

0026793

- 1 -

## Wärmepumpe, brennkraftmaschinengetrieben

Gegenstand der Erfindung ist eine raumsparende Wärmepumpenanlage mit extremer Energienutzung, einer integrierten Zusatzheizung für Spitzendeckung und als Notheizung, sowie fallweise einem angeschlossenen Generator zur Stromerzeugung.

Als ein Hauptteil von Wärmepumpenanlagen sind Aggregate mit von einem drehzahl- und leistungsgeregelten Verbrennungsmotor angetriebenen Kältemittelverdichter bekannt. Dieser Kältemittelverdichter kann auch ein Kolbenverdichter in ein- oder mehrstufiger Ausführung sein.

Aus dem Kolbenmaschinenbau sind auch integrierte Motor-Verdichter bekannt, bei welchen sowohl der oder die Motorkolben, als auch Verdichterkolben von der selben Kurbelwelle über jeweils gesonderte Hubzapfen oder Hubzapfen und Exzenter oder aber durch an dem oder den Motorpleuelstangen angelenkten Nebenpleuel für den oder die Verdichterkolben angetrieben werden.

Solche integrierte Motor-Verdichter sind einerseits für die Verarbeitung von gasförmigen oder flüssigen Kraftstoffen, andererseits zur Verdichtung von Luft, Brenngasen oder auch Kältemitteldämpfen bekannt.

Es sind auch Stromerzeugungsaggregate von Verbrennungsmotoren mit Abwärmeverwertung bekannt, welche je nach Bedarf, überwiegend zur Lieferung elektrischer Energie oder von Wärme belastbar bzw. regelbar sind. Sie sind neuerdings unter dem Begriff Blockheizkraftwerke bekannt geworden, weil mit diesem Ausdruck der Nutzung der Abwärme eine besondere Betonung verliehen werden soll.

Bekannt ist weiter, daß die für eine Wärmepumpe erforderlichen Zusatzaggregate wie Verdampfer, Kondensator und Expansionsventil in mehr oder weniger gedrängter Bauweise, ebenfalls aber als getrennte Baukörper, zu einer Wärmepumpenanlage zusammengestellt sind.

Zweck der vorliegenden Erfindung ist ein vorzugsweise flüssigkeitsgekühlter integrierter Motorverdichterblock in besonders kleiner, raumsparender Bauart, zur Anwendung in Wärmepumpenanlagen für das Heizen und Kühlen von Gebäudeinnenräumen mit einem speziell gestalteten Flüssigkeitsraum für die Kühlung des oder der Motorzylinder, wahlweise auch für die Temperierung des oder der Verdichterzylinder und die Unterbringung des Abgaswärmetauschers. Dem Erfindungsgedanken entspricht es auch, den Abgaswärmetauscher so zu gestalten, daß ein Zusatzbrenner angebaut werden kann, der vorzugsweise für die Verbrennung desselben gasförmigen oder flüssigen Kraftstoffes eingerichtet ist, mit dem der Verbrennungsmotor betrieben wird. Erfindungsgemäß wird auch der Kondensator des Kältemittelkreislaufes in den Motor-Verdichter-Block integriert oder wenigstens räumlich so eng anschließend angeordnet, daß die Wärmeverluste auf einem Minimum gehalten werden. Darüber hinaus ist erfindungsgemäß vorgesehen, dem Motorverdichter wahlweise einen Stromerzeuger anzubauen und ihn von der Kurbelwelle des Verbrennungsmotors antreiben zu lassen. Dieser Stromerzeuger ist einerseits nur zur Erzeugung von Ohmscher Wärme vorgesehen, sodaß in diesem Falle die Frequenz eine untergeordnete Bedeutung besitzt, oder andererseits mit üblicher Frequenz, wobei dann die Wärmepumpe in an sich bekannter Weise geregelt werden muß, wie durch Schadraumregelung, Thermostatregelung, Bypaßregelung. In Sonderfällen (kein Wärmebedarf, nur Strombedarf) ist sie gänzlich außer Betrieb zu nehmen.

Neben dem Raumgewinn erreicht die erfindungsgemäße Anordnung eine optimale Energieausnutzung. Durch den Zusatzbrenner wird eine sehr wirtschaftliche Spitzendeckung ermöglicht. Gleichzeitig ist die schwingungs-
und schallgedämpfte Aufstellung verbessert. Schließlich
kann alternativ oder zusätzlich elektrische Energie
erzeugt werden. Damit wird die Anlage zu einer
autarken Versorgungsanlage mit Energie in Form von
Wärme und Elektrizität.

Die wirtschaftliche Spitzendeckung bedarf noch einer
Erläuterung.

Erfahrungsgemäß sind nämlich die Tage eines maximalen
Heizungsbedarfes nur selten. Die volle Leistung einer
Heizungsanlage wird aber nur während dieser Tage benötigt. Soferne daher eine Heizungsanlage auf die
Spitzenleistung ausgelegt wird, ist sie während der
überwiegenden Betriebsdauer nur schwach belastet.

Durch die Anordnung des Zusatzbrenners ist es möglich,
die Wärmepumpe, welche eine rationelle Primärenergieverwendung ermöglicht, wesentlich kleiner zu dimensionieren.
Während der seltenen Tage des maximalen Heizungsbedarfes
wird die erforderliche Spitze durch den Zusatzbrenner
gedeckt. Der Zusatzbrennerbetrieb bedeutet natürlich
keine energieeinsparende Wirkung wie bei einer Wärmepumpe, was aber im Hinblick auf die nur kurze Betriebsdauer praktisch nicht ins Gewicht fällt.

Im Störungsfall stellt der Zusatzbrenner eine gewisse
Reserveheizung dar.

0026793

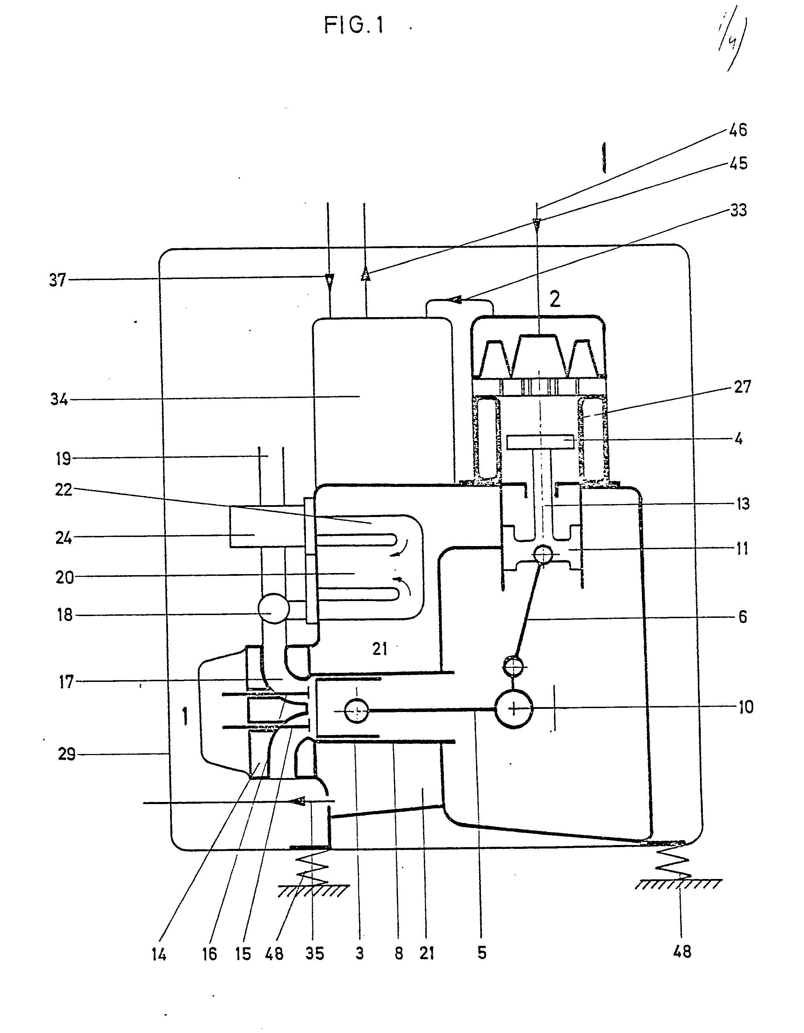

Fig. 1 zeigt einen beispielsweise als Kolbenmaschine
ausgebildeten Verbrennungsmotor -1- mit beispielsweise an einem Nebenpleuel -6- angelenkten Kreuzkopf
-11-, welcher die Verbindung zu dem Verdichterkolben
-4- über die Kolbenstange -13- darstellt. Die gemeinsame Kurbelwelle -10- ist in üblicher Weise über die
Motorpleuelstange -5- mit dem Motorkolben -3- verbunden, welcher seinerseits im Motorzylinder -8- geführt wird. Der Motorzylinderkopf -14- besitzt mind.
je ein Einlaßventil -15- und ein Auslaßventil -16-,
welches vorzugsweise so angeordnet ist, daß der
Abgaskanal -17- auf kürzestem Weg über ein Bypaßventil -18- wahlweise mit der Abgasleitung -19- oder
dem Abgaswärmetauscher -20- verbunden werden kann.
In der Abbildung ist Abgasventil und Abgaskanal nach
oben gerichtet, dargestellt. Soferne der Abgaswärmetauscher an anderer Stelle angeordnet wird, ist Abgasventil und Abgaskanal jeweils in der entsprechenden
Richtung vorzusehen.

Alle zu kühlenden Teile des Verbrennungsmotors -1-, vor
allem der Motorzylinder -8- und der Motorzylinderkopf
-14- sind in der beispielsweise dargestellten Anordnung
von einem Flüssigkeitsraum -21- umgeben, in welchen
auch der Abgaswärmetauscher -20- und eine Brennkammer
-22- eingebaut sind. Die wärmeabführenden Wände aller
dieser Teile werden also von der selben Flüssigkeit
berührt, welche durch eine von der Kurbelwelle oder
vorzugsweise fremd angetriebenen Pumpe -38- umgewälzt
wird und die Wärme von den zu kühlenden Teilen des Verbrennungsmotors -1- des Abgaswärmetauschers -20- und
wahlweise bzw. zusätzlich der Brennkammer -22- abführt.

0026793

Das Abgas der Zusatzheizung mit dem Brenner -24-
und der Brennkammer -22- wird in weiterer Ausgestaltung der Erfindung vorzugsweise demselben Abgaswärmetauscher -20- zugeführt, um die Abwärme aus
beiden Verbrennungsvorgängen gleichzeitig oder
alternativ bestmöglich und mit geringstem Aufwand zu
nutzen. Die Abwärmeströme sind mit Pfeilen angedeutet.

Zur Kühlung des Kältemittelverdichters wird wahlweise der Kältemitteldampf über den Kühlmantel des
Verdichters angesaugt. Die Kühlung des Kältemittelverdichters ist aber auch durch das allgemeine Kühlmedium
oder in Verbindung mit der Wärmeabfuhr unter der
Kapsel möglich.

Es entspricht einer weiteren erfindungsgemäßen,
zeichnerisch aber nicht dargestellten Ausgestaltung,
die Brennkammer -22- und den Abgaswärmetauscher -20-
weitgehend zu einem Bauteil zusammenzuziehen.

In einer erfindungsgemäßen erweiterten Ausführung wird
das ganze Aggregat mit einer wärme- und schalldichten
Kapsel -29- umgeben, in welcher die gesamte abstrahlende
Restwärme aufgefangen wird. In diesem Fall wird die
Wärme- und Schallisolation an der Innen- und Außenseite
der Kapsel -29- angebracht.

Der beispielsweise doppelt wirkende, mit Stopfbüchse gezeichnete Kältemittelverdichter -2- hat hier mehrere
Funktionen: Er bewirkt im dargestellten Beispiel durch
die Versetzung der beiden Zylinderachsen um 90° einen
ruhigen Lauf der gesamten Maschine durch weitgehenden
Ausgleich der Massenkräfte erster Ordnung. Er verdichtet das Kältemittel, um es im geschlossenen Kreislauf zu transportieren und ihm durch Energiezufuhr eine
höhere Temperatur zu vermitteln und er überträgt die durch
seine Kühlung erforderliche Wärme der Anlage.

0026793

Das im Verdichterzylinder -27- komprimierte, erwärmte, dampf- bzw. gasförmige Kältemittel wird über eine oder mehrere Leitungen -33- dem Kondensator -34- des Wärmepumpenaggregates zugeführt, welcher vorzugsweise im Gehäuse des Verbrennungsmotors -1- ein- oder angebaut, also noch innerhalb der Kapsel -29- angebracht ist. Er wird als erstes Element der wärmeübertragenden Flächen von der Flüssigkeit der Heizanlage, Eintritt -37-, durchströmt und ist daher in der Gesamtsituierung innerhalb des Aggregates im Bereich entsprechend niedriger Temperaturen zu situieren. Dann werden nacheinander die Brennkammer -22-, der Abgaswärmetauscher -20- und der Zylinder -8- umströmt, schließlich verläßt die Flüssigkeit der Heizanlage das Aggregat über eine Heizflüssigkeitsaustrittsleitung -35-.

Die Anordnung der Aggregatteile Kondensator, Abgaswärmetauscher und Brennkammer in ihrer relativen Lage zum Motorzylinder können auch gegenüber der zeichnerischen Darstellung geändert werden. So wäre es beispielsweise möglich, den Kondensator -34- unterhalb des Motorzylinders -8- anzuordnen.

Die Schwingungen des Aggregates sind durch den zuvor geschilderten, sehr günstigen Massenausgleich an sich gering, werden jedoch erfindungsgemäß durch eine elastische Lagerung -48- der gesamten Kapsel -29- in wirtschaftlichster Weise minimiert.

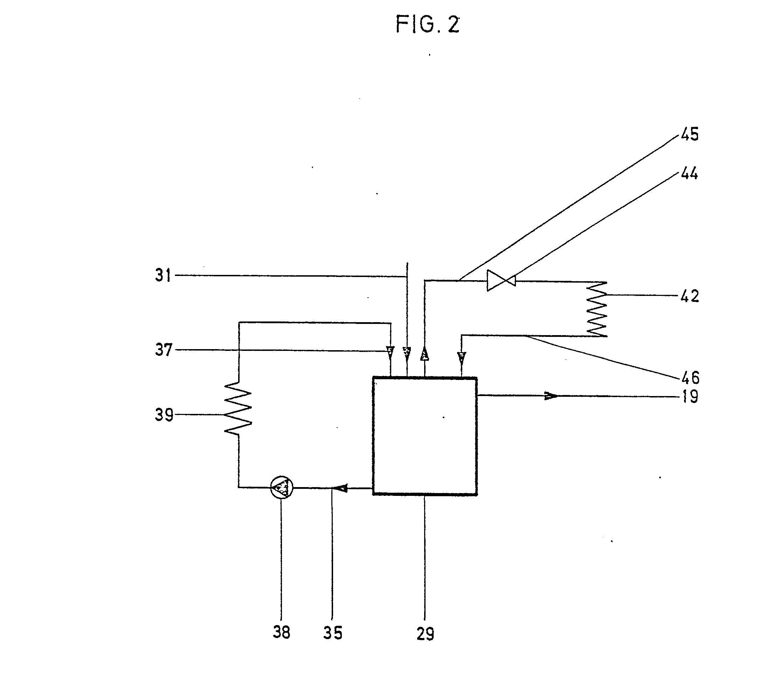

Fig. 2 zeigt das Schema der Wärmepumpenanlage mit dem in Fig. 1 beispielsweise gezeigten Aggregat innerhalb seiner Kapsel -29-, der Heizflüssigkeitseintrittsleitung -37-, einer Umwälzpumpe -38-, der Heizflüssigkeitsaustrittsleitung -35- und den Raumheizkörpern -39-.

Dem Aggregat wird Brennstoff und der für die Verbrennung erforderliche Sauerstoffträger durch ein

Leitungssystem -31- zugeführt, seine Abgase werden
durch eine Abgasleitung -19- in stark gekühltem Zustand abgeführt. Ihre Restenergie wird, je nach den
örtlichen Verhältnissen, weiter nutzbar gemacht.

Der Kältmittelkreislauf wird vom Aggregat nach Fig.1
in der Kältemittelaustrittsleitung -45- über das
Expansionsventil -44-, den Verdampfer -42- und die
Kältemitteleintrittsleitung -46- geschlossen. Im
Aggregat führt die Kältemitteleintrittsleitung -46-
zum Verdichterzylinder -27- und über die Leitung -33-
weiter zum Kondensator -34-.

Die erfindungsgemäße Anordnung ergibt somit eine
maximale Ausnutzung der mit dem Brennstoff zugeführten Energie und einen minimalen Platzbedarf,
während die Geräuschentwicklung durch die der Wärme-,
Schwingungs- und Schallisolation dienende Kapsel -29-
auf einem Minimum gehalten werden kann.

Der Platzbedarf dieses gekapselten Wärmepumpenaggregates
ist geringer als der für eine Zentralheizanlage erforderliche
und verursacht in der erfindungsgemäßen Ausführung
auch weniger Lärm als ein handelsüblicher Brenner.

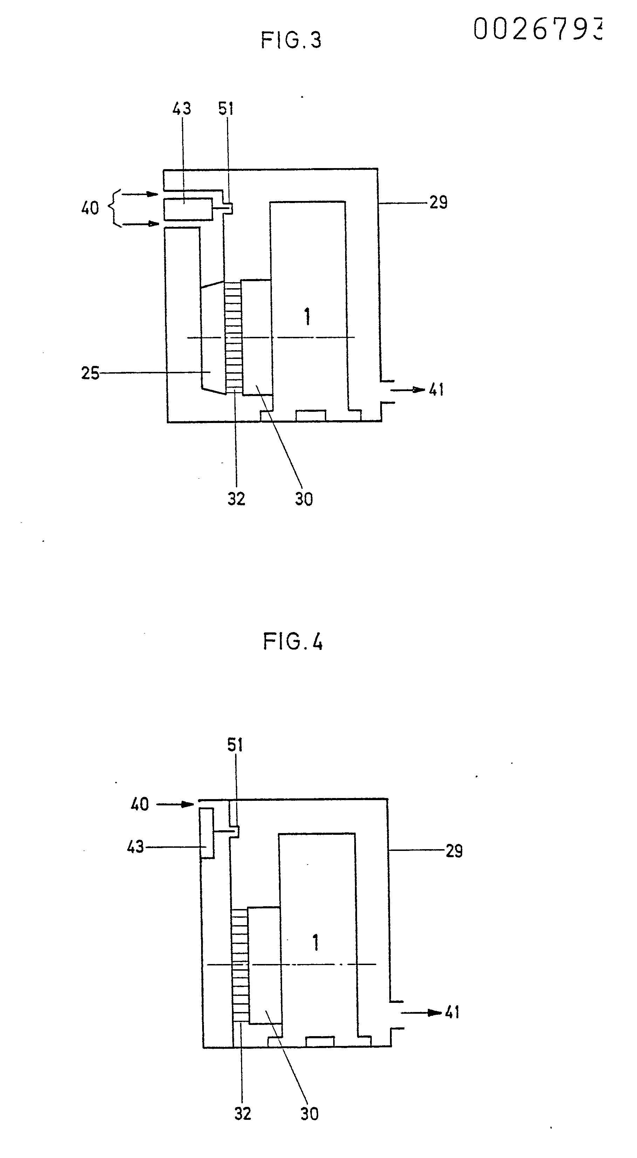

Aus der Anordnung gemäß Fig. 2 ist auch ein weiterer
Vorteil der erfindungsgemäßen Anordnung zu erkennen.
Das Aggregat in der Kapsel -29- kommt weitgehend anschlußfertig auf die Einbaustelle und muß nur an den
Heizkreis -35-,-37-, an Zu- und Ableitung zum Verdampfer -45-,-46-, an die Kraftstoffversorgung -31-
und hinsichtlich der Abgasleitung -19- angeschlossen
werden. Ein weiterer Anschluß für Zu- und Abluft zur
Kühlung wird noch in Fig. 3 und 4 erläutert.
Schließlich ist noch der elektrische Anschluß für die
Steuerung und den wahlweisen Antrieb der Pumpe -38-
und (oder) des Lüfterrades -32- nötig.

In weiterer Ausgestaltung des erfindungsgemäßen Gedanken ist es vorgesehen, daß der Raum unmittelbar unter der Kapsel durch eine entsprechende Luftbewegung oder durch die Strömung eines anderen Mediums seine Wärme vorzugsweise an den Verdampfer des Kältemittelkreislaufes abgibt. In weiterer Verfolgung des erfindungsgemäßen Luftstromes unter der Kapsel kann auch die übrige Kühlung ganz oder teilweise auf Luftkühlung umdisponiert werden.

Für den Fall, als nach einer erfindungsgemäßen Variante auch ein Generator entsprechend elastisch an die Motorwelle gekuppelt wird, ist dieser inner - halb der Haube vorgesehen, sodaß auch seine Abwärme in die gesamte Wärmenutzung einbezogen werden kann.

In Fig.3 ist eine solche Anordnung beispielsweise dargestellt. Durch den Kühllufteintritt -40- wird das Kühlmedium, vorzugsweise Luft, über den Generator -25- mittels eines Lüfterrades -32- angesaugt. Danach tritt das Kühlmedium in den Raum unter der Kapsel, durchströmt diesen Raum, nimmt dabei die gesamte Abwärme auf und verläßt die Kapsel durch den Kühlluftaustritt -41-. Der Generator ist vorzugsweise über einen Zwischenflansch -30- an den Motor -1- angeflanscht. Der Kühlluftaustritt -41- ist ebenfalls mit schalldämpfenden Elementen ausgestattet.

In Fig. 4 ist die sinngemäße Ausführung für den Fall dargestellt, als kein Generator vorgesehen ist. Über den Kühllufteintritt -40- saugt das Lüfterrad -32- das Kühlmedium an, welches nach Wärmeaufnahme beim Kühlluftaustritt -41- den Kapselraum wieder verläßt.

Die Weiterführung des Kühlmediums nach Austritt -41- ist nicht näher dargestellt, vorzugsweise aber mittels einer Verbindungsleitung zum Verdampfer der Wärmepumpenanlage gedacht. Eine weitere erfindungsgemäße Variante besteht darin, daß die in -41- austretende erwärmte
Luft für Zwecke einer Luftheizung herangezogen wird.

Die Steuerung -43- ist jeweils im Eintrittsstrom des
Kühlmediums angeordnet, um die für diesen Aggregatteil erforderliche niedrige Temperatur zu gewährleisten. Außerdem wird die Verkleidung dieser Steuerung
durch entsprechende Ausbildung zur Schalldämpfung im
Eintrittsbereich ausgenützt. Zur Erleichterung von
Reparaturen ist die Steuerung mittels Steckverbindung -51-
angeschlossen.

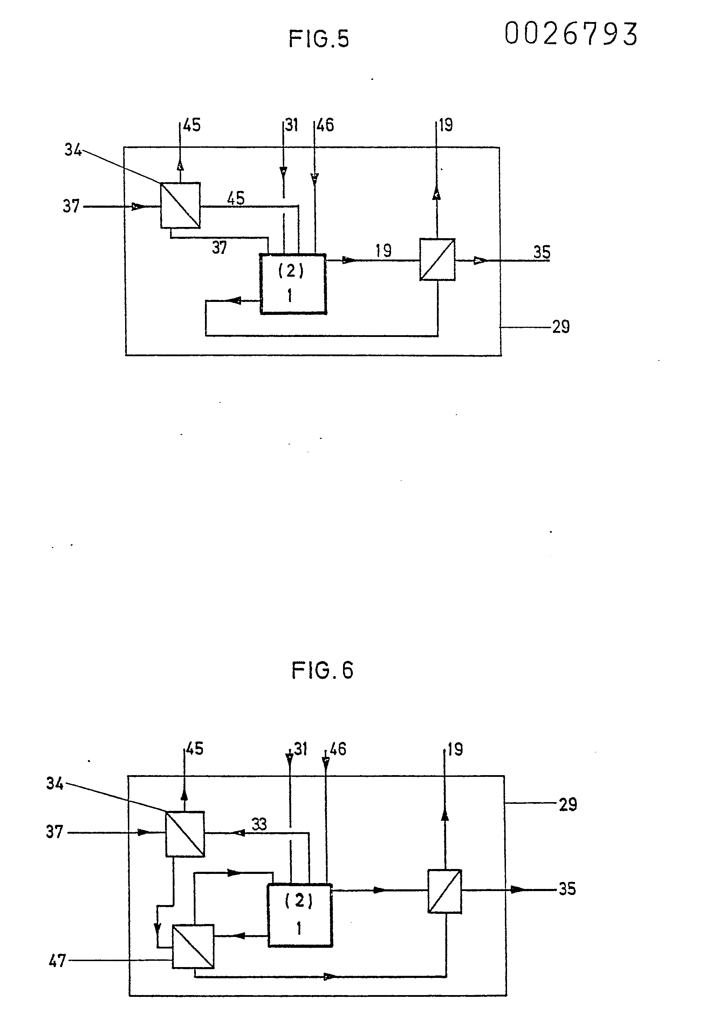

In Fig. 5 ist die in Figur 1 dargestellte Wärmeübertragung schematisch wiedergegeben. Durch -37- tritt
die Heizflüssigkeit in den Kondensator -34- ein und
übernimmt dessen Wärme. Sodann findet der Wärmeaustausch mit dem Motor -1-, allenfalls auch mit dem
Kältemittelverdichter -2- statt. Sodann übernimmt die
Heizflüssigkeit über den Abgaswärmetauscher -20- die
Abgaswärme und verläßt mittels -35- (Heizflüssigkeitsaustritt) das Aggregat.

In Fig. 6 ist eine weitere beispielsweise sinngemäße
Variante dargestellt. Diese unterscheidet sich von
der Anordnung gemäß Fig. 5 dadurch, daß die Abwärme
des Motors -1- und allenfalls auch des Kältemittelverdichters -2- über einen Kühlwasserwärmetauscher -47-
an die Heizflüssigkeit übertragen wird.

In den beiden Anordnungen nach Fig. 5 und 6 sind
sämtliche Aggregatteile, wie erfindungsgemäß vorgesehen,
in der Kapsel -29- untergebracht, was ebenfalls
schematisch dargestellt ist.

Ein besonderer Vorteil der Anordnung gemäß Fig. 6
besteht darin, daß bei stillstehendem Motor d.h. bei
ausgeschalteter Wärmepumpe mittels der Zusatzheizung
über Brenner -24-, Brennkammer -22-, welche erfindungsgemäß in den Abgaswärmetauscher -20- führt, ein
eingeschränkter Heizbetrieb möglich ist, wie er
durch die Leistung des Zusatzbrenners -24-
gegeben ist. Damit ist im Störungsfall der Wärmepumpe ein eingeschränkter Ersatzheizbetrieb
möglich.

Die erfindungsgemäße Anordnung ermöglicht mehrere
Steuerungsvarianten. Durch eine an sich bekannte
automatische Drehzahlregelung in Funktion von der
erforderlichen Heizleistung wird die optimale Drehzahländerung des Kältemittelverdichters ermöglicht.
Ist die maximale Drehzahl erreicht und damit eine
weitere Erhöhung der Leistung des Kältemittelverdichters nicht mehr möglich, kann der Verbrennungsmotor durch Zuschalten des Generators in Verbindung
mit Heizwiderständen in der Leistung gesteigert
werden, wodurch eine weitere Erhöhung der Heizleistung möglich ist. Eine Steigerung der Heizleistung zur Deckung von Spitzenlasten ist durch
Zuschaltung des erfindungsgemäßen Brenners mit
Brennkammer möglich. In Sonderfällen wo kein oder
nur ein sehr geringer Wärmebedarf erforderlich ist,
aber ein Strombedarf gedeckt werden soll, wird die
Drehzahl auf der hiefür erforderlichen Höhe konstant
gehalten und die Leistung des Kältemittelverdichters
und damit des Wärmepumpenkreislaufes durch an sich
bekannte Regelungsmöglichkeiten eingeschränkt, wie
Schadraumregelung,Ventilabhebung,Bypaßregelung im
Extremfall durch Abschaltung des Kältemittelverdichters bzw. Entleerung des Kältemittels.
Das Wärmepumpenaggregat kann überdies, wie in Heizkreisläufen allgemein bekannt, durch Rücklaufbeimischung auf einer vom Heizkreislauf in gewissen
Grenzen unabhängigen Temperatur betrieben werden.

- 1 -

Patentansprüche

1. Wärmepumpe mit einem von einer Brennkraftmaschine
angetriebenen Kältemittelverdichter, einem
Kondensator, einem Expansionsventil und einem
Verdampfer und weitestgehender Ausnützung der
anfallenden Abwärme, bei der sämtliche wärmeabgebenden Teile, wie der Antriebsmotor, der
Kältemittelverdichter, Abwärmetauscher und der
Kondensator in einer wärme- und schalldichten
sowie schwingungsdämpfend gelagerten Kapsel
als ein Aggregat untergebracht sind, die eine
Einrichtung zur Wärmeabgabe aufweist dadurch gekennzeichnet, daß ein Zusatzbrenner (24) innerhalb dieser Kapsel (29) eingebaut ist und daß
eine mit der Kapsel (29) verbundene Heizungsanlage
(35, 37, 38, 39; 40,41) zur Ausnützung der innerhalb der Kapsel (29) abgegebenen Wärme vorgesehen
ist.

2. Wärmepumpe nach Anspruch 1 gekennzeichnet dadurch,
daß in Verbindung mit dem Abgaswärmetauscher (20)
eine Brennkammer (22) für den Zusatzbrenner (24)
innerhalb des Aggregates bzw. des Motorgehäuses
raumsparend integriert und so angeordnet ist, daß
die wärmetauschenden Flächen des Abgaswärmetauschers teilweise oder ganz mitbenützt werden.

3. Wärmepumpe nach Anspruch 1 und 2 gekennzeichnet dadurch, daß die wärme- und schalldichte Kapsel (29)
mindestens eine Luftzufuhröffnung (40) mit schallmindernden Einbauten aufweist.

0026793

4. Wärmepumpe nach den Ansprüchen 1 bis 3 gekennzeichnet dadurch, daß die wärme- und schalldichte Kapsel (29) mindestens eine Luftabfuhröffnung (41) aufweist, durch welche die infolge der Wärmeabstrahlung des Aggregates und der Konvektion im Kapselinnenraum entstandene Abwärme abgeführt und einer weiteren Nutzung zugeleitet wird.

5. Wärmepumpe nach den Ansprüchen 1 bis 4 dadurch gekennzeichnet, daß die wärme- und schalldichte Kapsel (29) in einem vorzugsweise unteren Teil die schwingungs- und körperschallisolierenden Elemente (48) im anderen, vorzugsweise oberen Teil die Steuerung (43) aufnimmt.

6. Wärmepumpe nach den Ansprüchen 1 bis 5 gekennzeichnet dadurch, daß die Steuerung (43) vorzugsweise im Strom der in die Kapsel eintretenden Frischluft (40 ) angeordnet ist.

7. Wärmepumpe nach den Ansprüchen 1 bis 6 dadurch gekennzeichnet, daß der die Steuerungselemente (43) enthaltende bzw. umschließende Kasten ein Bestandteil der schallmindernden Einbauten ist.

8. Wärmepumpe nach den Ansprüchen 1 bis 7 gekennzeichnet dadurch, daß zusätzlich ein Generator (25) an die Brennkraftmaschine (1) vorzugsweise angeflanscht und so innerhalb der Kapsel (29) angeordnet ist, daß der in die wärme- und schalldichte Kapsel durch die Luftzufuhröffnung (40) eintretende Frischluftstrom zuerst in das Generatorgehäuse zur Kühlung desselben eintritt.

9. Wärmepumpe nach den Ansprüchen 1 bis 8 gekennzeichnet dadurch, daß durch die Anordnung eines Heizwiderstandes die Stromerzeugung des Generators (25) zur Wärmeerzeugung herangezogen wird.

10. Wärmepumpe nach den Ansprüchen 1 bis 9 gekennzeichnet dadurch, daß die Kapsel durch eine entsprechende Eigenmasse und in Verbindung mit einer federnden Aufstellung zur Schwingungsdämpfung herangezogen wird.

11. Wärmepumpe nach den Ansprüchen 1 bis 10 gekennzeichnet dadurch , daß der Kältemittelverdichter (2) Hohlräume aufweist, durch welche ein Kühlmedium geleitet wird, dessen Wärmeinhalt mit der übrigen Abwärme genutzt wird.

12. Wärmepumpe nach den Ansprüchen 1 bis 11 gekennzeichnet dadurch, daß der Kältemitteldampf durch entsprechende Hohlräume im Zylinder des Kältemittelverdichters hindurch angesaugt und damit dieser gekühlt wird.

13. Wärmepumpe nach den Ansprüchen 1 bis 12 gekennzeichnet dadurch, daß die Abgasleitung ein Bypaßventil enthält, mit welchem der Abgaswärmetauscher umgangen werden kann.

JENBACHER WERKE
Aktiengesellschaft

FIG.1

0026793

FIG. 2

FIG.3

0026793

FIG.4

# FIG.5

# FIG.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | EP - A - 0 003 723 (SINTAB SWEDINVENTOR) <br>    * Seite 4, Zeile 6 - Seite 11, Zeile 20; Figuren 1-4 * <br><br> -- | 1,3,4 |
| | FR - A - 2 309 806 (CHAUSSON) <br>    * Seite 1, Zeile 39 - Seite 6, Zeile 26; Figuren 1,2 * <br><br> -- | 1,11 |
| | DE - A - 2 500 641 (M.A.N.) <br>    * Seite 4, letzter Absatz - Seite 8, letzter Absatz; Figur * <br><br> -- | 1-4,7 |
| | FR - A - 2 398 888 (FIAT) <br>    * Seite 2, Zeile 19 - Seite 5, Zeile 22; Figuren 1-7 * <br><br> -- | 1,5,6, 8,10 |
| | DE - A - 2 530 503 (STADTWERKE HEIDENHEIM) <br>    * Insgesamt * <br><br> -- | 1,8 |
| | DE - A - 2 728 273 (RUHRGAS) <br>    * Seite 5, Absatz 3 - Seite 9, Absatz 2; Figuren 1-4 * <br><br> -- | 1,9 |
| E | EP - A - 0 009 786 (KUPPERSBUSCH) <br>    * Seite 4, Zeile 6 - Seite 7, Zeile 38; Figuren 1,2 * <br><br> -- ./. | 1,5,8 |

**KLASSIFIKATION DER ANMELDUNG (Int.Cl. 3)**

F 24 D 11/02
F 24 J 3/04
F 25 B 29/00//
F 02 G 5/00

**RECHERCHIERTE SACHGEBIETE (Int. Cl. 3)**

F 24 D
F 24 J
F 25 B
F 02 G

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-06-1980 | BOETS |

| | Europäisches Patentamt | EUROPÄISCHER RECHERCHENBERICHT | 0026793 Nummer der Anmeldung |
| --- | --- | --- | --- |
| | | | EP 79 10 3851 |

-2-

| EINSCHLÄGIGE DOKUMENTE | | | KLASSIFIKATION DER ANMELDUNG (Int.Cl. 3) |
| --- | --- | --- | --- |
| Kategorie | Kennzeichnung des Dokuments mit Angabe, soweit erforderlich, der maßgeblichen Teile | betrifft Anspruch | |
| A | LU - A - 77 843 (MOTORHEIZUNG) | | |
| A | DE - A - 2 617 396 (HEIDENHEIMER) | | |
| A | FR - A - 2 265 206 (INOVE-JAPAX) | | |
| A | US - A - 3 294 157 (COUGHLAN) | | |
| A | FR - A - 2 263 465 (MULTIFLUID) | | |
| | ---- | | |
| | | | **RECHERCHIERTE SACHGEBIETE (Int. Cl. 3)** |